# EUROPEAN PATENT SPECIFICATION

(11) **EP 2 431 263 B1**
(45) Date of publication and mention of the grant of the patent: **21.11.2012**
(21) Application number: 11181356.4
(22) Date of filing: 15.09.2011
(51) Int. Cl.: B62J 1/12, B62K 11/04, B62K 19/46

(54) **Saddle ride-type vehicle**
Grätschsitz-Fahrzeug
Véhicule du type monté à califourchon

(30) Priority: 17.09.2010 JP 2010210093
(43) Date of publication of application: 21.03.2012
(73) Proprietor: Honda Motor Co., Ltd., Tokyo 107-8556 (JP)
(72) Inventor: Kawasaki, Hidekuni c/o HONDA R&D CO., LTD., Saitama, 351-0193 (JP); Hagimoto, Masashi c/o HONDA R&D CO., LTD., Saitama, 351-0193 (JP)
(74) Representative: Beder, Jens

(56) References cited:
- EP-A1- 1 245 481
- EP-A2- 0 952 074
- JP-A- 2006 111 180
- US-A1- 2008 179 151

## Description

The present invention relates to a saddle ride-type vehicle, and particularly to a saddle ride-type vehicle having improved a hinge mechanism opening and closing a seat on which a rider is seated.

Vehicles such as motorcycles are termed as saddle ride-type vehicles, because the rider is seated by straddling the seat. As disclosed in EP 0 952 074 A2, for example, the saddle ride-type vehicles include a vehicle termed as a low-floor, saddle ride-type vehicle (a scooter-type motorcycle) because of having lower-floor portions on which the rider can rest his/her feet.

In a structure of a low-floor saddle ride-type vehicle disclosed in EP 0 952 074 A2, as is well known, its vehicle body frame includes a head pipe, as well as paired left and right main tubes extending from this head pipe toward the rear of the vehicle, as its main frame. In this structure, an engine cylinder(s) and an air-intake unit for supplying an air-fuel mixture to the engine are placed under the main tubes, and a center cover is laid over the cylinder(s) and the air-intake unit.
The structure has a feature that, since no component part is placed over the cylinder(s) or the air-intake unit, maintenance can be easily performed on the cylinder(s) and the air-intake unit once the center cover is detached.

On the other hand, a structure disclosed by Japanese Patent Application Publication No. 2008-279961 includes a hinge mechanism whose arm brackets for enabling the seat to be opened and closed are welded to a main tube which extends near and along a head pipe toward under the vehicle and subsequently toward the rear of the vehicle. This seat opening and closing structure has a feature that, because the hinge mechanism is placed closer to the vehicle front, a storage space can be additionally formed in front of the seat, and the storage space can be widely opened and closed at the same time as the seat is opened and closed.

In this respect, in the structure as disclosed in EP 0 952 074 A2 in which the engine is placed relatively closer to the vehicle front, there are advantages including the following: as disclosed by Japanese Patent Application Publication No. 2008-279961, the seat can make large opening and closing movements by making the seat openable and closable with the hinge mechanism placed above the engine, while the storage area can be widened by forming the storage area closer to the vehicle front than the seating area.
However, the placement of the hinge mechanism for opening and closing the seat above the engine poses a problem that, when maintenance is performed on the cylinder(s) and the air-intake unit, the placement hinders the maintenance work and impairs workability.
Furthermore, a saddle ride-type vehicle with a vehicle body frame that includes a pair of main tubes extending from a head pipe toward the rear of the vehicle is disclosed in EP 0 952 074 A2. Seat rails are extending from rear portions of the main tubes upward toward the rear of the vehicle. The engine is fastened to the vehicle body frame under the main tubes and an air-intake unit is placed under the main tubes for supplying an air-fuel mixture. Above the seat rails there is displaced a seat and a storage box is situated under the seat which is openably and closably.

EP 1 245 481 A1 discloses a seat attachment for a saddle-type vehicle. Attached to one end of the seat there is a seat hinge and a first seat hook and a second seat hook are arranged at the other end of the seat and in the center of the seat respectively. The seat is arranged to a close storage box. For engagement with the seat hooks there is provided a main locking mechanism and a sub locking mechanism which are connected to each other.

JP 2006-111180 A discloses a saddle-type vehicle including two storage boxes. A first storage box is arranged in a space in front of the cylinder head of the vehicle and the second box is arranged under a rear portion of the vehicle seat. The top sides of the two storage boxes are opened when the seat is lifted. For maintenance reasons the front and rear storage boxes are detachably mounted.

Another saddle-type vehicle is known from US 2008/0179151 A1. The saddle-type vehicle comprises a frame which extends the long and outer surface of a fuel tank. To reduce vibration transmitted to the fuel tank, there are vibration isolating members arranged between the fuel tank and the body frame on the one hand and the fuel tank and the seat of the vehicle on the other hand.

The present invention has been made in view of the foregoing problem. An object of the present invention is to provide a saddle ride-type vehicle which secures easy access to the engine and the air-intake system from above the vehicle and thus enhances ease in maintenance even though the saddle ride-type vehicle employs a structure in which the hinge mechanism for opening and closing the seat is placed above the engine and the air-intake system.

### [Means for Solving the Problems]

To achieve the above-described object, a first aspect of the present invention is a saddle ride-type vehicle according to claim 1.

A second aspect of the present invention, in addition to the configuration of the first aspect of the present invention, is characterized in that the hinge attachment frame is formed substantially in a U shape and includes: paired forwardly-extending frames extending along the main tubes; and a frame cross portion connecting front portions of the forwardly-extending frames together and provided with the rotary pivot portion, and the damper holding member is provided to any one of the forwardly-extending frames.

A third aspect of the present invention, in addition to the configuration of any one of the first and second aspects of the present invention, is characterized in that a battery holding portion for holding a battery box is provided inside the hinge attachment frame in a plan view.

A fourth aspect of the present invention, in addition to the configuration of the third aspect of the present invention, is characterized in that a box extension portion extended upward from the battery box is provided on a side opposite in a vehicle width direction from a side on which the damper member is placed, and the box extension portion is designed in such a way that an electrical part is attached to the box extension portion.

A fifth aspect of the present invention, in addition to the configuration of any one of the first to fourth aspects of the present invention, is characterized in that the storage box is attached to storage box fixing stays provided to the vehicle body frame, and the hinge attachment frame is attached to the storage box fixing stays together with the storage box.

A sixth aspect of the present invention, in addition to the configuration of any one of the first to fifth aspects of the present invention, is characterized in that the damper holding portion is provided in such a way as to descend from one of the forwardly-extending frames toward under the vehicle.

According to the first aspect of the present invention, the hinge attachment frame and the seat can be handled integrally, because the hinge attachment frame included in the hinge mechanism is configured to hold the damper member and the rotary pivot portion for turnably supporting the seat. In addition, the hinge attachment frame can be easily detached from the vehicle body and the seat and the hinge mechanism can be detached together from the vehicle body, because the hinge attachment frame is designed to be attached to and detached from the main tubes of the vehicle body.
Therefore, according to the present invention, a large opening area is formed by detaching the hinge attachment frame, and thus maintenance is easily performed on the component parts and the like which are placed inside the vehicle body deeper than the hinge mechanism.

According to the second aspect of the present invention, there can be built the structure for the hinge attachment frame which enables the large space between the left and right main tubes to be utilized to the maximum and the variety of component parts can be placed inside the frame, because: the hinge attachment frame includes the forwardly-extending frames extending along the respective main tubes, and the frame cross portion connecting the front portions of the forwardly-extending frames; and accordingly the hinge attachment frame is substantially in a U shape in the plan view.
Furthermore, the seat's opening and closing operability as well as the space needed to place the variety of component parts can be easily secured, because the damper holding portion is provided to one of the forwardly-extending frames.

According to the third aspect of the present invention, the battery can be placed in a compact manner and the battery can be attached to and detached from the vehicle body together with the hinge attachment frame, because the battery holding portion for holding the battery box is provided inside the hinge attachment frame. This makes it possible to make a large space when the hinge attachment frame holding the large component part such as the battery is detached from the vehicle body frame, and accordingly to enhance ease in maintenance of component parts which are situated deeper than the large component part.

According to the fourth aspect of the present invention, the battery, its electrical part and the damper member can be placed inside the hinge attachment frame with better space efficiency, because of the structure in which the electrical part is placed on the side opposite in the vehicle width direction from the side on which the damper member is placed. Furthermore, the structure for holding the electrical component parts can be simplified, and thus to shorten the electrical wires and cables, because of the configuration in which: the battery box is provided with the box extension portion which extends toward above the battery box; and the electrical part is attached to the box extension portion.
Moreover, many component parts can be detached at a time by only detaching the hinge attachment frame, because the component parts are held by the hinge attachment frame. Additionally, a larger opening space can be secured and the detachment work can be easily performed, because many component parts can be detached together.
Additionally, the number of wires and cables to be disconnected can be decreased when the battery is detached from the vehicle body frame, because the battery and the electrical part are held by the holding means with the integrated structure (the box extension portion and the battery box).

According to the fifth aspect of the present invention, since the storage box is attached to the storage box fixing stays provided to the vehicle body frame and the hinge attachment frame is attached to the storage box fixing stays together with the storage box, the structure can be simplified and thus the fastening parts are reduced in number, because the two members are attached to each fastening part.

According to the sixth aspect of the present invention, the distance between the damper holding portion and the seat-side damper attachment portion placed above the damper holding portion is set longer and accordingly a longer stroke length for the damper member can be secured, because the damper holding portion is provided in such a way as to descend from one of the forwardly-extending frames toward under the vehicle.
Fig. 1 is a left side view of an embodiment of a saddle ride-type vehicle of the present invention.
Fig. 2 is a schematic partial side view for showing an internal structure of a seat section in the saddle ride-type vehicle shown in Fig. 1 with vehicle body cover members detached from the seat section.
Fig. 3 is a schematic plan view of a main part of the saddle ride-type vehicle shown in Fig. 1, from which vehicle body cover members are detached.
Fig. 4 is a schematic perspective view of the main part of the saddle ride-type vehicle shown in Fig. 1 with the vehicle body cover members and the seat detached from the main part.
Fig. 5 is a right side view of the main part of the saddle ride-type vehicle shown in Fig. 1 with the vehicle cover members detached from the main part.
Fig. 6 is a right side view of the main part shown in Fig. 5 with the seat opened.
Fig. 7 is a left side view showing a hinge attachment frame of the embodiment of the saddle ride-type vehicle of the present invention.
Fig. 8 is a plan view of the hinge attachment frame viewed in a direction indicated by arrow A in Fig. 7 with no damper member attached to the hinge attachment frame.
Fig. 9 is a schematic side view showing the damper member of the embodiment of the present invention.
Fig. 10 is a schematic plan view of the saddle ride-type vehicle shown in Fig. 1 with the vehicle cover members detached from the vehicle, and with the hinge mechanism and the like further detached from the vehicle.

Descriptions will be provided for an embodiment of the present invention on the basis of the attached drawings.
It should be noted that each drawing is requested to be viewed in a direction which makes reference numerals on the drawing legible. In addition, abbreviations Fr, Rr, U, D, R and L written in each drawing denote frontward, rearward, upward, downward, rightward and leftward of the saddle ride-type vehicle of the embodiment, respectively.

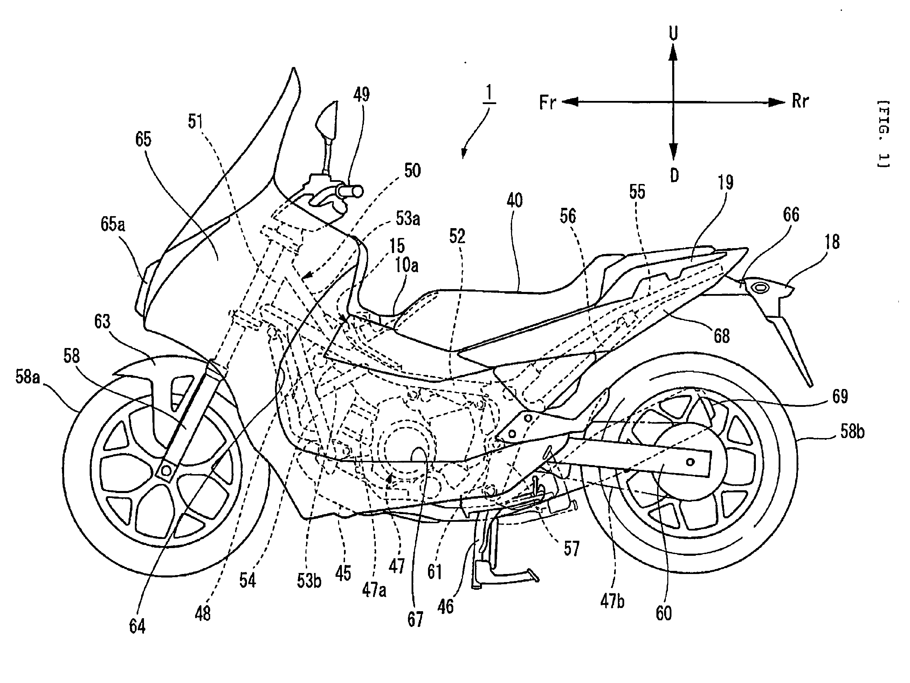

Fig. 1 is a left side view of a low-floor, saddle ride-type vehicle of an embodiment of the present invention.

A low-floor, saddle ride-type motorcycle 1 as a low-floor, saddle ride-type vehicle has a vehicle body frame 50 which includes: main tubes 52 extending rearward and slightly downward from a lower-end portion of a head pipe 51 to a vehicle body center; upper reinforcement tubes 53a extending obliquely downward and rearward from an upper-end portion of the head pipe 51, and connected to the respective main tubes 52; down tubes 54 extending obliquely downward and rearward from front portions of the main tubes 52, respectively; lower reinforcement tubes 53b extending obliquely between the down tubes 54 and the main tubes 52, and thus connecting the down tubes 54 and the main tubes 52 together, respectively; seat rails 55 extending slightly upward from rear ends of the main tubes 52 toward the rear of the vehicle, respectively; and pivot plates 57 connected to the main tubes 52 and the seat rails 55, extending in a vertical direction of the vehicle, and supporting a pivot shaft 61, sub-frames 56 and the like, respectively.

In addition, the low-floor, saddle ride-type motorcycle 1 includes: a front wheel 58a rotatably provided to lower ends of front forks 58 which are revolvably attached to the head pipe 51; a handlebar 49 provided to an upper end of the front forks 58; a power unit 47 attached to lower portions of the main tubes 52, respectively; a rear wheel 58b rotatably provided in the rear of the power unit 47, with assistance of a swing arm 60; and a rear cushion, and the like.

Furthermore, an external structure of the low-floor, saddle ride-type motorcycle 1 includes, for example: a front cowl 65 surrounding a front portion of the head pipe 51; leg shields 64 surrounding a rear portion of the head pipe 51; step floors 67 continuing to the leg shields 64, and extending almost horizontally; side covers 68 extending from the step floors 67 toward the rear of the vehicle, and covering the respective seat rails 55; and a seat 40 placed on the side covers 68, supported by the seat rails 55, and extending toward the front and rear of the vehicle.

Although detailed description is omitted, reference numeral 63 denotes a front fender; 65a, a headlamp; 66, a rear fender; 45, an exhaust pipe; 46, a stand; 69, a silencer; 18, a rear combination lamp; and 19, a grab rail designed to be grabbed by a passenger seated on a pillion seat.

The power unit 47 has a decelerator 47b in the rear of the engine 47a. The decelerator 47b is an important power transmission component for decelerating a driving force generated by the engine 47a, and transmitting the decelerated driving force to the rear wheel 58b.
Incidentally, a rider keeps a riding posture by: seating himself/herself on the seat 40; resting his/her feet on the step floors 67; and gripping the handlebar 49.

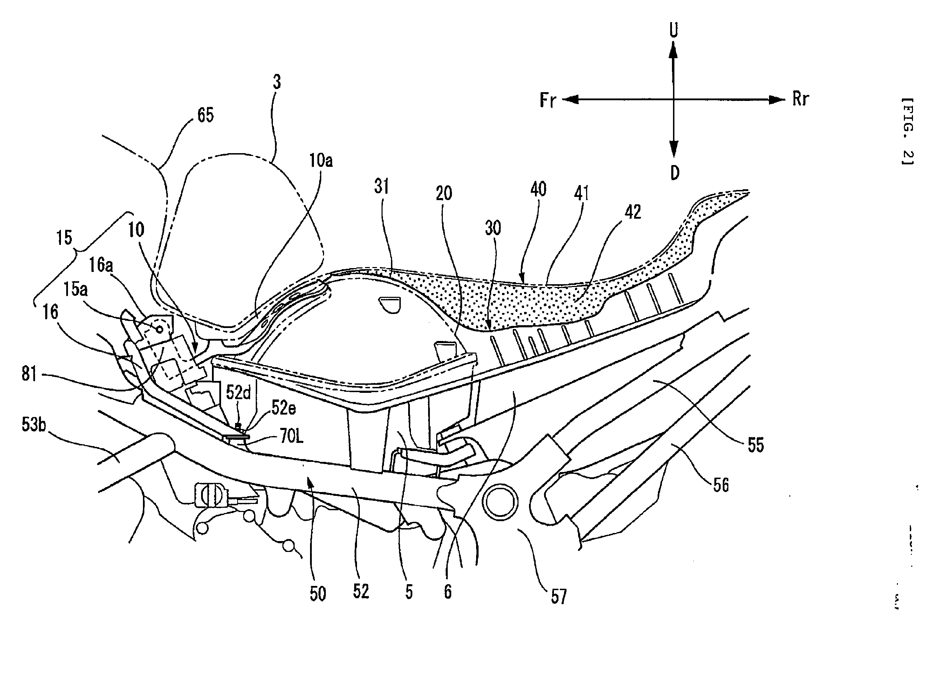

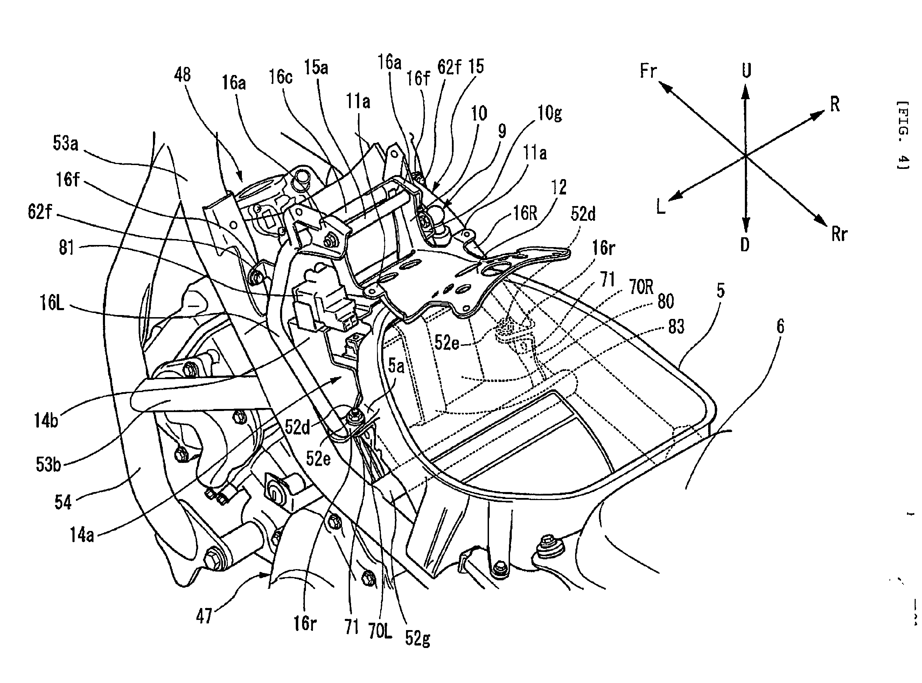

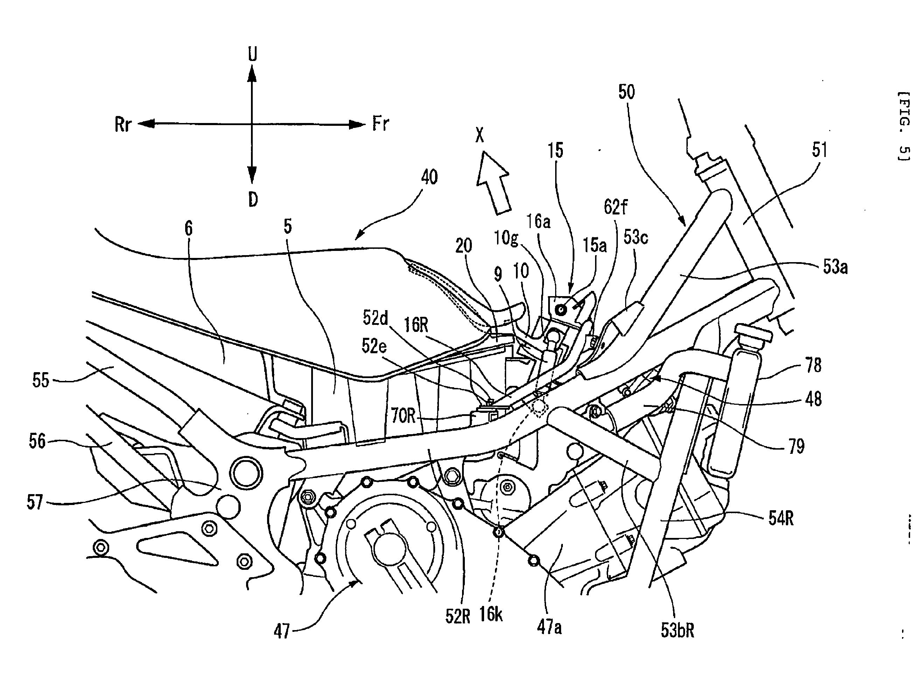

Referring to Figs. 2 to 9, descriptions will be provided for a structure of the seat and its periphery in the low-floor, saddle ride-type motorcycle 1 of the present invention.
In this embodiment, the seat 40 is connected to the main tubes 52 of the vehicle body frame 50 with assistance of the hinge mechanism 15. In other words, as shown in Figs. 4 and 5, the hinge mechanism 15 includes the seat-side hinge member 10, which rotates integrally with the seat 40. Thus, the seat 40 is opened and closed in accordance with the opening and closing operations of the hinge mechanism 15 because of the structure in which: the seat-side hinge member 10 is connected to a lid member 20; and the lid member 20 is connected to a seat bottom plate 30.

In addition, a storage box 5 is placed under the seat 40, and a fuel tank 6 is placed in the rear of the storage box 5. A radiator 78 is arranged near the front surface of an air-intake unit 48, while a radiator hose 79 and the like are arranged near the right side surface of the air-intake unit 48. Incidentally, although not illustrated, an air cleaner case is arranged immediately in front of the hinge mechanism 15, and the air cleaner case is connected to the air-intake unit 48 via an air pipe passage (not illustrated) .

As shown in Fig. 2, a center cover 10a is attached over the seat-side hinge member 10, and a front cover 65 is laid over attachment brackets 16a. A space behind the front cover 65 and above the center cover 10 is formed as a straddling space 3 in front of the seat 40.

As shown in Fig. 2 illustrating an inner structure of the seat 40, the seat 40 has a structure in which: a cushion material 42 is provided on the seat bottom plate 30 keeping its rigidity; and a seat skin 41 is provided to cover the front surface of the cushion material 42 in such a way that the seat skin 41 wraps the cushion material 42.

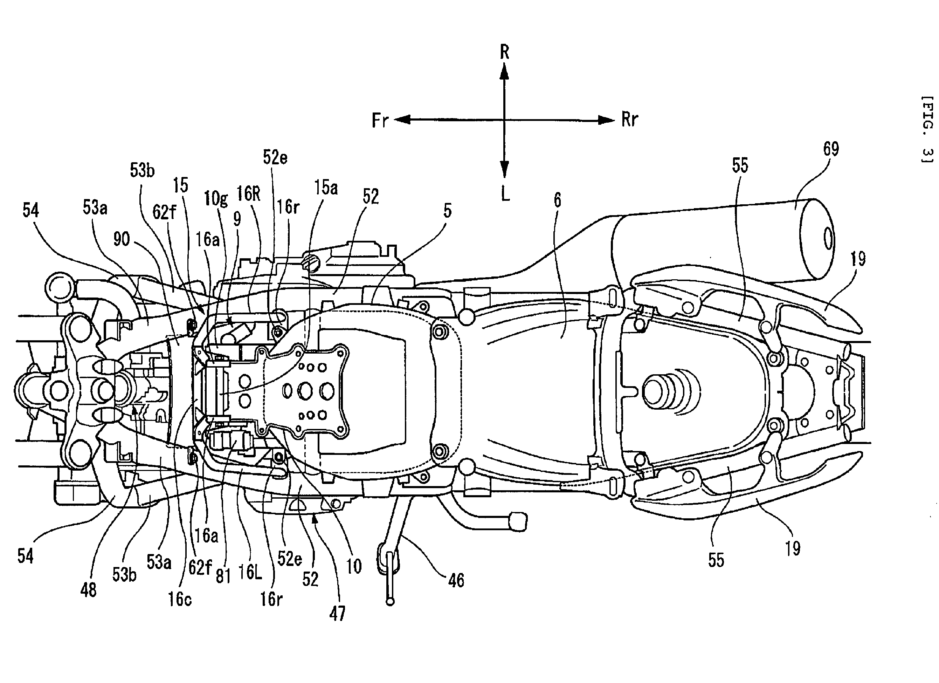

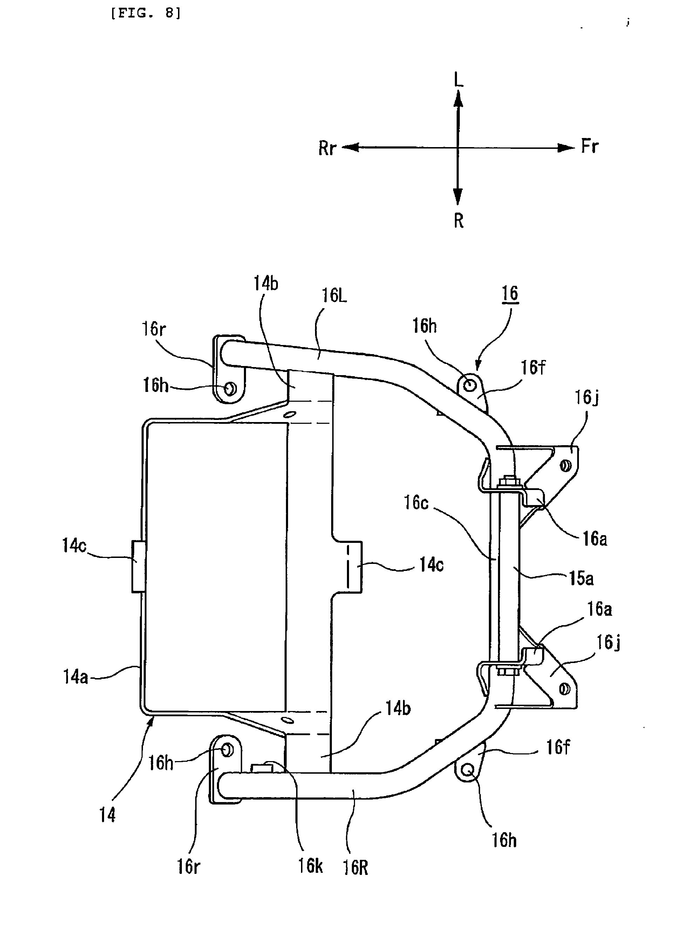

The hinge mechanism 15 of the present invention is a metal member. The hinge mechanism 15 has a hinge attachment frame 16 which is substantially in a U shape in a plan view when viewed from the vehicle front and which is laid between the left and right main tubes 52, as shown in Figs. 3 and 4 illustrating the hinge mechanism 15 in a state of being attached, and as shown in Fig. 8 illustrating the hinge mechanism 15 in a state of being detached.
The attachment brackets 16a are provided to the vehicle front end-side portions of the hinge attachment frame 16. The seat-side hinge member 10 is pivotally supported by the attachment brackets 16a in a way that the seat-side hinge member 10 turns around a rotary pivot portion 15a. The seat 40 is turnably supported by this pivotally-supporting structure.

Descriptions will be provided for a structure of the hinge attachment frame 16 included in the hinge mechanism 15 and its vicinity.
Incidentally, with regard to the seat 40, only the seat-side hinge member 10 is illustrated in Figs. 3 and 4, whereas the seat 40 as a whole is omitted from Figs. 3 and 4. In addition, wires for an electrical part 81 and the like, the air cleaner case, as well as the hose and the like for the air-intake system, are omitted from Figs. 3 and 4, when deemed necessary.

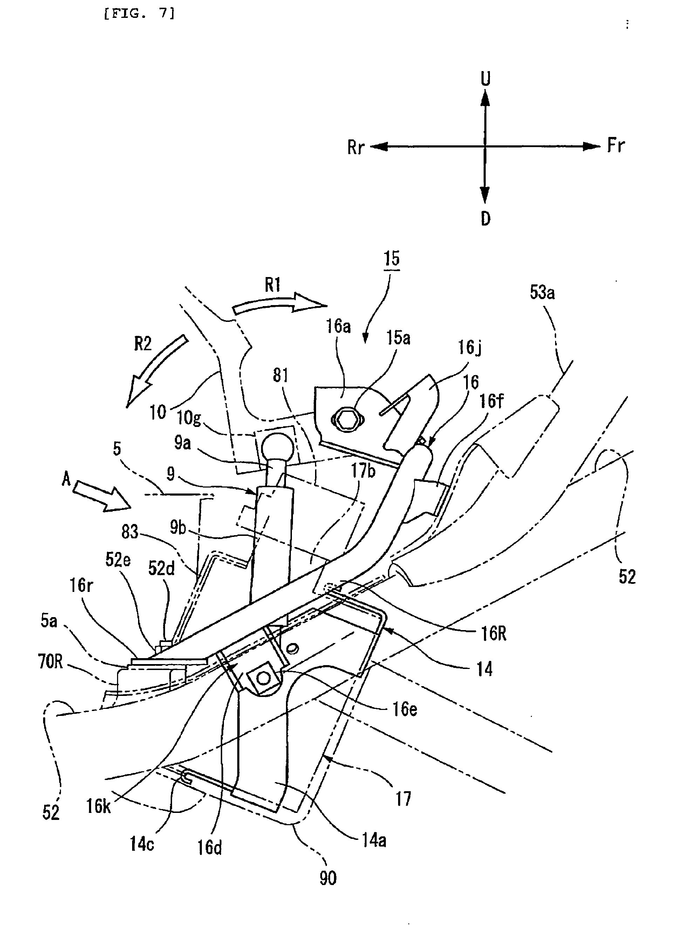

As shown in Figs. 3 and 7, the embodiment employs a structure in which: the hinge attachment frame 16, which may be considered as the main body portion of the hinge mechanism 16, has the rotary pivot portion 15a for turnably supporting the seat 40 in its vehicle front-side portion; and a damper member 9 is attached between a seat-side damper attachment portion 10g of the seat-side hinge member 10 constituting a turning base of the seat 40 and a damper holding portion 16k.

Furthermore, the hinge attachment frame 16 is detachably provided to the main tubes 52 with the assistance of an attachment structure using fastening members. Detailed descriptions will be provided for the attachment structure.
The hinge attachment frame 16 is provided with paired front-side attachment brackets 16f, 16f in its vehicle front portions which stand up toward above the vehicle, and insertion holes 16h are formed in the front-side attachment brackets 16f, 16f. Moreover, the hinge attachment frame 16 is provided with rear-side attachment brackets 16r, 16r in its vehicle rear-side ends, and insertion holes 16h are respectively formed in the rear-side attachment brackets 16r, 16r as well.

Attachment bolts 62f are inserted through the front-side attachment brackets 16f, 16f, and are screwed and fixed to the upper reinforcement tubes 53a, respectively. In addition, projecting screw portions 52d projectingly provided to storage box fixing stays 70R, 70L, which will be described later, are inserted through the insertion holes 16h in the rear-side attachment brackets 16r, 16r, and are subsequently fixed to the rear-side attachment brackets 16r, 16r by screwing attachment nuts 52e to the projecting screw portions 52d, respectively.

As shown in Figs. 3 and 4, the hinge attachment frame 16 of the embodiment has a pipe-frame structure which is substantially in a U shape, and which includes: forwardly-extending frames 16R, 16L extending along the main tubes 52; and a frame cross portion 61c to which the forwardly-extending frames 16R, 16L are connected with their front portions slightly curved inward. Furthermore, the rotary pivot portion 15a is provided to the frame cross portion 16c, and the damper holding portion 16k is provided to the forwardly-extending frame 16R which is one of the forwardly-extending frames.

As shown in Figs. 7 and 8, the hinge attachment frame 16 of this embodiment is provided with a battery holding portion 14 for holding a battery box 17. As shown in Fig. 8, fixation portions 14b, 14b in the right and left ends of the battery holding portion 14 are welded to the forwardly-extending frames 16R, 16L in such a way that the battery holding portion 14 is situated inside the hinge attachment frame 16 in a plan view.

Furthermore, the battery holding portion 14 has a structure in which the battery holding portion 14 includes a box fixation frame 14a capable of holding the bottom surface-side portion, front surface-side portion, and left side and right side portions of the battery box 17. The battery holding portion 14 is capable of holding and fixing the battery box 17 (see Fig. 4) in such a way that, for example, a claw member (not illustrated) provided in the front surface-side portion of the battery box 17 is engaged with an end of the box fixation frame 14a while a battery fixation member 83 is laid between hook portions 14c respectively provided in the centers of the upper and lower ends of the frame.
This battery box 17 is provided with a heat guard 90 in such a way that the lower portion and the front portion of the battery box 17 are covered with the heat guard 90. Incidentally, the heat guard 90 is placed in such a way that both of the left and right portions of the heat guard 90 are laid on the respective main tubes 52, and is designed to protect electrical equipment, inclusive of a battery, from heat of the engine.
In addition, the forwardly-extending frame 16R is provided with the damper holding portion 16k, to which the lower end portion of the damper member 9 is attached, in such a way that the damper holding portion 16k extends toward under the vehicle.
Incidentally, the damper holding portion 16k is provided with a female screw thread portion 16e into which a male screw portion 9c of the damper member 9, which will be described later, fits.
Moreover, cover member attachment portions 16j, 16j and the like are provided in front portions of the hinge attachment frame 16 whenever deemed necessary.

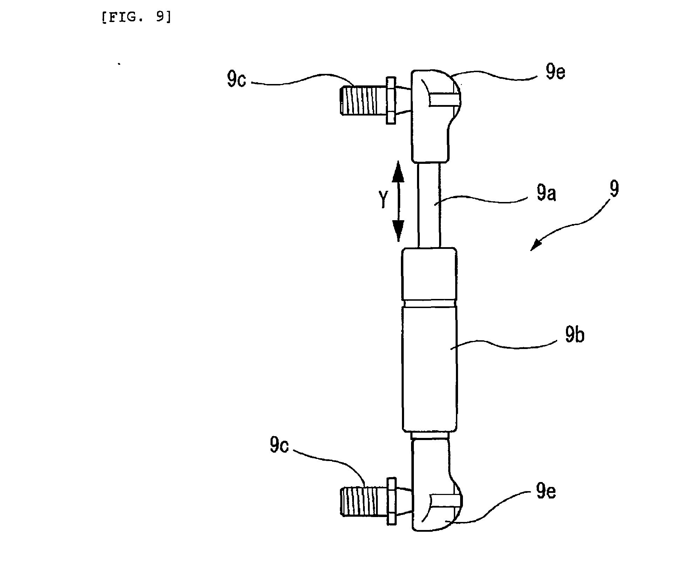

As shown in Fig. 9, the damper member 9 of this embodiment has a configuration in which an inner shaft 9a is capable of moving (capable of moving in directions indicated by arrow Y) inside an outer shaft 9b with a specialized biasing force.
In addition, the male screw portions 9c are pivotally connected to front end portions 9e of the inner shaft 9a and the outer shaft 9b, respectively, in such a way that the directions of their connections can flexibly respond. To put it specifically, the directions of their connections are designed to be capable of responding to the swing movement of the damper member 9 during the opening operation (in a direction indicated by arrow R1 in Fig. 7) and the closing operation (in a direction indicated by arrow R2 in Fig. 7) of the seat 40, because the male screw portion 9c on the upper side of the drawing is connected to the seat-side damper attachment portion 10g of the seat-side hinge member 10, while the male screw portion 9c on the lower side of the drawing is connected to the female screw thread portion 16e of the damper holding portion 16k.

In this embodiment, as shown in Fig. 4, a box extension portion 17b (see Fig. 7) extendedly projected upward from the battery box 17 is provided on a side, which is opposite in the vehicle width direction, from a side where the damper member 9 is placed. In addition, the electrical part 81 is attached to the box extension portion 17b, and is designed to be connected to the battery 80, which is situated immediately under the electrical part 13, in a location near the battery 80.

As shown in Fig. 4, the embodiment further adopts a configuration in which: the storage box 5 is attached to the storage box fixing stays 70R, 70L provided to the vehicle body frame 50; and the hinge attachment frame 16 is also attached and fixed to the storage box fixing stays 70R, 70L.

This attachment and fixation structure is that in which: the projecting screw portions 52d are provided to attachment surfaces 71 of the front ends of the storage box fixing stays 70R, 70L provided to a cross pipe 52g in such a way that the projecting screw portions 52d are directed upward; holes of the respective storage box attachment portions 5a are caused to be penetrated by the projecting screw portions 52d; on top of the holes of the storage box attachment portions 5a, the insertion holes 16h of the rear-side attachment brackets 16r are caused to be penetrated by the projecting screw portions 52d; and thereafter, the attachment nuts 52e are screwed and thus fixed to the projecting screw portions 52d.
The configuration in which, as described above, the projecting screw portions 52d are projectingly provided to the attachment portions makes it possible to hold the storage box 5 in a predetermined location even when the hinge attachment frame 16 is detached from the vehicle body frame 50. In addition, the configuration makes it easy to position the hinge attachment frame 16 to the vehicle body frame when the hinge attachment frame 16 is attached to the vehicle body frame.

Moreover, in this embodiment, as shown in Fig. 7, the damper holding portion 16k is provided to the hinge attachment frame 16 in such a way that the damper holding portion 16k extends from the forwardly-extending frame 16R toward under the vehicle.
To put it differently, the configuration in which the damper holding portion 16k extends from the forwardly-extending frame 16R toward under the vehicle makes it possible to set a longer distance between the damper holding portion 16k and the seat-side damper attachment portion 10g of the seat-side hinge member 10, and accordingly makes it possible to set longer the expansion and contraction strokes which the damper member 9 makes when the seat 40 is opened and closed (i.e., when the seat 40 turns in the directions indicated by arrows R1, R2).

Descriptions will be provided for how a feature part of the embodiment of the low-floor, saddle ride-type motorcycle 1 having the foregoing structure works.
In the embodiment, the seat 40 has lock means (not illustrated), which keeps the seat 40 closed, inside a rear portion of the seat 40. Accordingly, while the seat 40 is kept closed, the storage box 5 is closed and the fuel tank 6 is covered with the seat 40, as shown in Figs. 1, 2 and 5.

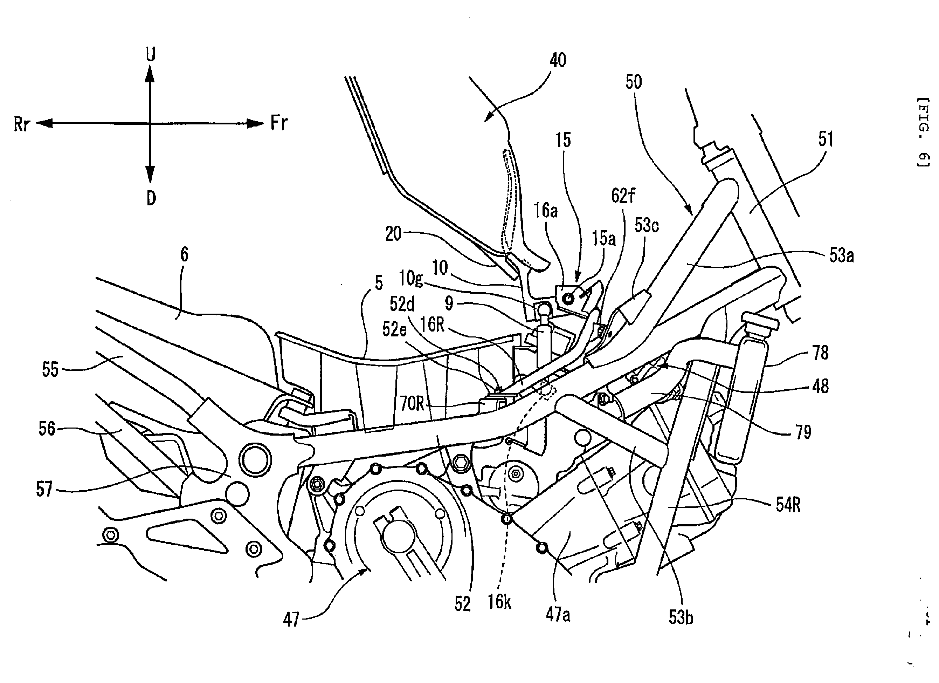

On the other hand, when the seat 40 is opened for the purpose of using the storage box 5, the lock having kept the seat 40 closed is released, and the seat 40 is operated to open toward above the vehicle as shown in Fig. 6.
Thereby, the seat 40 as a whole turns around the rotary pivot portion 15a. During this opening operation, since the seat 40 is held by the damper member 9 connected to the seat-side hinge member 10, the seat 40 makes a stable turning movement and exhibits a better operability, as well as the seat is securely kept opened by the damper member 9. Moreover, the damper member 9 whose movement strokes are larger is used for this embodiment, because the extension of the damper holding portion 16k toward under the vehicle enlarges the space where the damper member 9 is set. Accordingly, the seat 40 widely opens at larger opening strokes.

Descriptions will be provided for maintenance of the engine air-intake system, including the air-intake unit 48, which is placed under the hinge mechanism 15.
For the purpose of maintaining the air-intake unit 48, first of all, the cover members are detached depending on the necessity. Thereafter, the hinge attachment frame 16 of the hinge mechanism 15 and the heat guard 90 are detached (in a direction indicated by cross (X) in Fig. 5). In this event, the battery 80 and the seat 40, together with the hinge attachment frame 16, can be detached from the main tubes 52 at a time by: disconnecting some wires for the electrical part 81 and the like; and removing the bolts 62f, 62f and the nuts 52e, 52e.
The storage case 5 is held in the predetermined location by the projecting screw portions 52d which are projectingly provided, while the hinge attachment frame 16 is detached from the vehicle body frame 50.

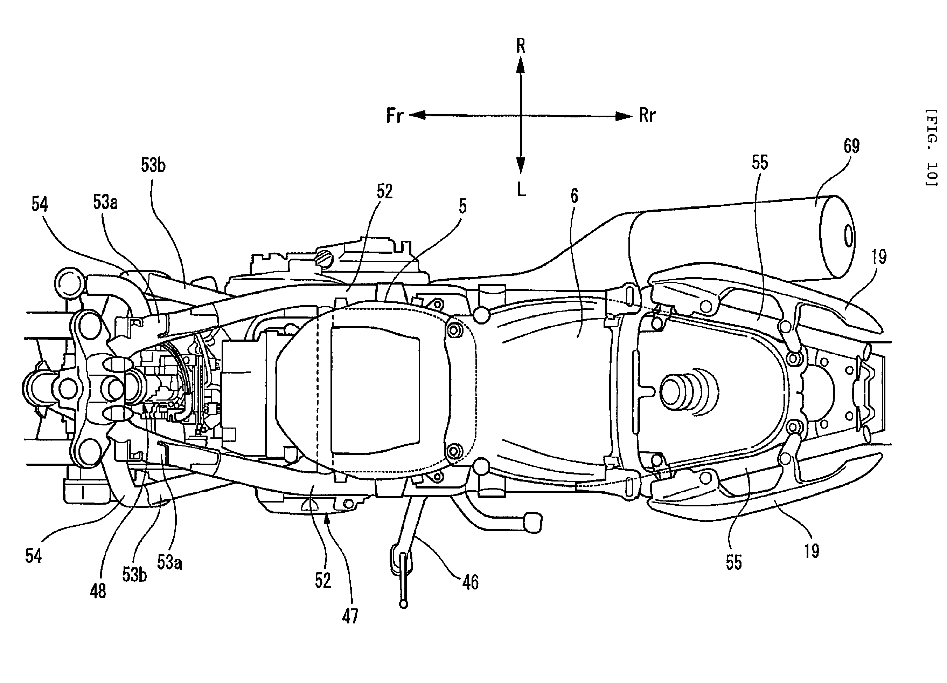

The detachment of the hinge mechanism 15 and the heat guard 90 forms a large opening in an upper area in the vehicle, whereby the air-intake unit 48 becomes visible through the opening, as shown in Fig. 10. Accordingly, a work space is easily secured for the air-intake unit 48. In addition, when the hinge mechanism 15 is attached after the work, fixation work can be easily completed by: connecting some wires; and using the four fastening members, namely, the bolts 62f, 62f and the attachment nuts 52e, 52e. Furthermore, when the hinge attachment frame 16 is attached, the positioning of the hinge attachment frame 16 can be easily achieved by only causing the insertion holes 16h of the rear-side attachment brackets 16r to be penetrated by the projecting screw portions 52d.

As described above, since the hinge mechanism 15 is designed to be attachable to and detachable from the main tubes 52 of the vehicle body with the battery 80, the electrical part 81, the damper member 9 and the like held inside the hinge attachment frame 16, the large opening area is formed when the hinge attachment frame 16 is detached. For this reason, the maintenance can be performed much easily on the components and the like which are situated deep inside the opening area.

The embodiment of the present invention has been described using the low-floor saddle ride-type vehicle (the scooter-type motorcycle) as an example. However, the present invention is not limited to the motorcycle of this type. The invention can be applied to saddle ride-type vehicles of other types.
Furthermore, although the number of fastening points at which the hinge attachment frame 16 is fixed is set at four in the foregoing embodiment, the number is not limited to four, and may be determined depending on the necessity. Moreover, the bolt fastening structure and the nut fastening structure are not limited to those in the foregoing embodiment. The bolt fastening structure and the nut fastening structure may be changed whenever deemed necessary. In addition, although, in the embodiment, the damper member 9 is placed on the right side of the vehicle while the electrical part 81 is placed on the left side of the vehicle, the damper member 9 and the electrical part 81 may be placed vice versa.
- 1: low-floor, saddle ride-type motorcycle (saddle ride-type vehicle)
- 5: storage box
- 6: fuel tank
- 9: damper member
- 10: seat-side hinge member
- 14: battery holding portion
- 15: hinge mechanism
- 16: hinge attachment frame
- 16k: damper holding portion
- 17: battery box
- 40: seat
- 45: exhaust pipe
- 48: air-intake unit
- 50: vehicle body frame
- 52: main tube
- 70R, 70L: storage box fixing stay

## Claims

1. A saddle ride-type vehicle (1) including:
a vehicle body frame (50) including paired main tubes (52) extending from a head pipe (1) toward a rear of the vehicle, and seat rails (55) extending from rear portions of the main tubes (52) upward toward the rear of the vehicle;
an engine (47) fastened to the vehicle body frame (50) under the main tubes (52);
an air-intake unit (48), placed under the main tubes (52), for supplying an air-fuel mixture to the engine (47) ;
a seat (40) placed above the seat rails (55), and attached to the vehicle body frame (50) openably and closably; and
a storage box (5) situated under the seat (40); **characterized in that** the vehicle further includes
a hinge mechanism (15) including a damper member (9) which has a function of assisting the seat (40) in its opening and closing,
wherein
a hinge attachment frame (16) included in the hinge mechanism (15) includes at least a rotary pivot portion (15a) for turnably supporting the seat (40) and a damper holding portion (16k) for holding the damper member (9), and
the hinge attachment frame (16) is attachably and detachably provided to the main tubes (52).

2. The saddle ride-type vehicle (1) according to claim 1, wherein
the hinge attachment frame (16) is formed substantially in a U shape and includes: paired forwardly-extending frames (16R, 16L) extending along the main tubes (52); and a frame cross portion (16c) connecting front portions of the forwardly-extending frames (16R, 16L) together and provided with the at least one rotary pivot portion (15a), and
the damper holding member (16k) is provided to any one of the forwardly-extending frames (16R, 16L).

3. The saddle ride-type vehicle (1) according to any one of claims 1 and 2, wherein
a battery holding portion (14) for holding a battery box (17) is provided inside the hinge attachment frame (16) in a plan view.

4. The saddle ride-type vehicle (1) according to claim 3, wherein
a box extension portion (17b) extended upward from the battery box (17) is provided on a side opposite in a vehicle width direction from a side on which the damper member (9) is placed, and
the box extension portion (17b) is designed in such a way that an electrical part (81) is attached to the box extension portion (17b).

5. The saddle ride-type vehicle (1) according to any one of claims 1 to 4, wherein
the storage box (5) is attached to storage box fixing stays (70R, 70L) provided to the vehicle body frame (50), and
the hinge attachment frame (16) is attached to the storage box fixing stays (70R, 70L) together with the storage box (5).

6. The saddle ride-type vehicle (1) according to claim 2, wherein
the damper holding portion (16k) is provided in such a way as to descend from one of the forwardly-extending frames (16R, 16L) toward under the vehicle.

## Patentansprüche

1. Fahrzeug des Satteltyps (1) aufweisend:
einen Fahrzeugrahmen (50) der ein Paar von Hauptrohren (52) aufweist, die sich von einem Kopfrohr (1) auf die Rückseite des Fahrzeugs hin erstrecken, und Sitzschienen (55), die sich von hinteren Abschnitten der Hauptrohre (52) aufwärts zu dem hinteren Ende des Fahrzeugs erstrecken;
eine Antriebsmaschine (47), die an dem Fahrzeugrahmen (50) unter den Hauptrohren (52) befestigt;
eine Lufteinlasseinheit (48), die unter den Hauptrohren (52) angeordnet ist um eine Luft-Kraftstoffmischung der Antriebsmaschine (47) zuzuführen;
einen Sitz (40) der über den Sitzschienen (55) platziert ist und der an dem Fahrzeugrahmen (50) zu öffnen und zu schließen angebracht ist; und
ein Aufbewahrungskasten (5) der sich unter dem Sitz (40) befindet;
**dadurch gekennzeichnet, dass** das Fahrzeug außerdem aufweist
einen Scharniermechanismus (15), der ein Dämpfungselement (9) aufweist, das eine Funktion zum Unterstützen des Sitzes (40) beim Öffnen und Schließen hat,
wobei
ein Scharnierbefestigungsrahmen (16), der in den Scharniermechanismus (15) enthalten ist, wenigstens einen drehbaren Drehgelenksabschnitt (15a) zum schwenkbaren Lagern des Sitzes (40) und einen Dämpferhalterabschnitt (16) zum Halten des Dämpferelements (9) aufweist, und
der Schanierbefestigungsrahmen (16) befestigbar und abnehmbar an den Hauptrohren (52) vorgesehen ist.

2. Fahrzeug des Satteltyps (1) gemäß Anspruch 1, wobei
der Scharnierbefestigungsrahmen (16) im Wesentlichen in einer U-Form gebildet ist und aufweist: ein Paar, sich in Vorwärtsrichtung erstreckender Rahmen (16R, 16L), die sich entlang der Hauptrohre (52) erstrecken; und ein Rahmenkreuzabschnitt (16c), der vordere Abschnitte der sich in Vorwärtsrichtung erstreckenden Rahmen (16R, 16L) miteinander verbindet und mit dem wenigstens einen drehbaren Drehgelenksabschnitt (15a) versehen ist, und
das Dämpferhaltelement (16k) an irgendeinem der sich in Vorwärtsrichtung erstreckenden Rahmen (16R, 16L) vorgesehen ist.

3. Fahrzeug des Satteltyps (1) gemäß einem der Ansprüche 1 und 2, wobei ein Batteriehalteabschnitt (14) zum Halten eines Batteriekastens (17) in einer Draufsicht innerhalb des Scharnierbefestigungsrahmens (16) vorgesehen ist.

4. Fahrzeug des Satteltyps (1) nach Anspruch 3, wobei ein Kastenerweiterungsabschnitt (17b) sich von dem Batteriekasten (17) erstreckt und in einer Breitenrichtung des Fahrzeugs auf einer gegenüberliegenden Seite von einer Seite, auf der das Dämpferelement (9) angeordnet ist, vorgesehen ist, und
der Kastenerweiterungsabschnitt (17b) so gestaltet ist, dass ein elektrisches Teil an dem Kastenerweiterungsabschnitt (17b) befestigt ist.

5. Fahrzeug des Satteltyps (1) gemäß einem der Ansprüche 1 bis 4, wobei der Aufbewahrungskasten (5) an Aufbewahrungskastenbefestigungsstützen (70R, 70L) befestigt ist, die an dem Fahrzeugrahmen (50) vorgesehen sind, und
der Scharnierbefestigungsrahmen (16) an den Aufbewahrungskastenbefestigungsstützen (70R, 70L) angebracht ist, gemeinsam mit der Aufbewahrungsbox (5).

6. Fahrzeug des Satteltyps (1) gemäß Anspruch 2, wobei
der Dämpferhalterabschnitt (16k) so vorgesehen ist, dass er von einem der sich vorwärts erstreckenden Rahmen (16R, 16L) aus sich in Richtung unter das Fahrzeug hinunter geht.

## Revendications

1. Véhicule de type à selle (1) comprenant :
une ossature de caisse de véhicule (50) comprenant des tubes principaux par paires (52) s'étendant depuis une tubulure de refoulement (1) vers un arrière du véhicule, et des rails de siège (55) s'étendant depuis des portions arrière des tubes principaux (52) vers le haut vers l'arrière du véhicule ;
un moteur (47) attaché à l'ossature de caisse du véhicule (50) sous les tubes principaux (52) :
une unité d'amenée d'air (48), placée sous les tubes principaux (52), pour délivrer un mélange air-carburant au moteur (47) ;
un siège (40) placé au-dessus des rails de siège (55) et fixé à l'ossature de caisse du véhicule de façon à pouvoir s'ouvrir et se fermer ; et
un coffre de rangement (5) situé sous le siège (40) ;
**caractérisé en ce que** le véhicule comprend en outre
un mécanisme de charnière (15) comprenant un organe d'amortisseur (9) qui a une fonction d'assistance au siège (40) lors de son ouverture et de sa fermeture,
dans lequel
un cadre de fixation de charnière (16) compris dans le mécanisme de charnière (15) comprend au moins une portion de pivot rotative (15a) permettant de supporter de façon rotative le siège (40) et une portion de maintien d'amortisseur (16k) pour maintenir l'organe d'amortisseur (9), et
le cadre de fixation de charnière (16) est agencé de façon fixable et amovible sur les tubes principaux (52).

2. Véhicule de type à selle (1) selon la revendication 1, dans lequel
le cadre de fixation de charnière (16) est formé sensiblement en forme de U et comprend : des cadres s'étendant vers l'avant par paires (16R, 16L) s'étendant le long des tubes principaux (52) ; et une portion transversale de cadre (16c) reliant ensemble les portions avant et les cadres s'étendant vers l'avant (16R, 16L) et dotée de la au moins une portion de pivot rotative (15a), et
l'organe de maintien d'amortisseur (16k) est agencé sur l'un quelconque des cadres s'étendant vers l'avant (16R, 16L).

3. Véhicule de type à selle (1) selon l'une quelconque des revendications 1 et 2, dans lequel
une portion de maintien de batterie (14) pour maintenir un boîtier de batterie (17) est agencée à l'intérieur du cadre de fixation de charnière (16) dans une vue en plan.

4. Véhicule de type à selle (1) selon la revendication 3, dans lequel
une portion d'extension de boîtier (17b) étendue vers le haut depuis le boîtier de batterie (17) est agencée sur un côté opposé dans un sens de largeur du véhicule depuis un côté sur lequel l'organe d'amortisseur (9) est placé, et
la portion d'extension de boîtier (17b) est conçue de sorte qu'une pièce électrique (81) est fixée à la portion d'extension de boîtier (17b).

5. Véhicule de type à selle (1) selon l'une quelconque des revendications 1 à 4, dans lequel
le coffre de rangement (5) est fixé à des étais de fixation de coffre de rangement (70R, 70L) agencés sur l'ossature de caisse du véhicule (50), et
le cadre de fixation de charnière (16) est fixé aux étais de fixation de coffre de rangement (70R, 70L) conjointement avec le coffre de rangement (5).

6. Véhicule de type à selle (1) selon la revendication 2, dans lequel
la portion de maintien d'amortisseur (16k) est agencée de façon à descendre depuis l'un des cadres s'étendant vers l'avant (16R, 16L) vers le dessous du véhicule.
